# EUROPEAN PATENT APPLICATION

(11) **EP 1 667 443 A2**
(43) Date of publication of application: **07.06.2006**
(21) Application number: 05257330.0
(22) Date of filing: 29.11.2005
(51) Int. Cl.: H04N 5/44

(54) **Restarter and video reception system**

(30) Priority: 06.12.2004 JP 2004352245
(71) Applicant: SONY CORPORATION, Tokyo 141 (JP)
(72) Inventor: Sakao, Katsutoshi, Shinagawa-Ku Tokyo (JP)
(74) Representative: Leppard, Andrew John

(57) **Abstract**

Embodiments of the present invention provide a restarter that is capable of recovering from a hung base unit from a remote location. The restarter includes a communication controller circuit, which is connected to a network to receive a control command that is transmitted from a terminal unit; a detection circuit for achieving control command detection when a first control command is received by the communication controller circuit; and a switch, which is subjected to on/off control that is exercised according to a detection output from the detection circuit. The switch is serially connected to a power supply line between a power input end of the base unit and a power supply end of the base unit. When the first control command is transmitted from the terminal unit, the switch is controlled during a predetermined period so that the status of the switch changes from ON to OFF and then back to ON in accordance with the detection output from the detection circuit.

## Description

The present invention relates to a restarter and a video reception system. Embodiments of the present invention relate to a restarter that is used for recovery when a base unit hangs up.

AV (Audio and Visual) and other electronic devices having a network function have been increasingly used. When an electronic device having a network function is used, it is possible to control its operation from a remote location and obtain information according to operation results at the remote location.

When, for instance, an AV device having a network function is used in a hotel or other location away from home, it is possible to view or listen to content that is prepared at home. When, for instance, a monitor camera having a network function is used, it is possible to exercise remote control to change the orientation of the monitor camera or the degree of zooming and precisely display a target on a monitor screen.

Related techniques are disclosed, for example, in Japanese Patent Laid-Open No. Hei 11-24801 or No. 2003-241861.

However, the software executed by an electronic device having a network function may hang up for some reason or other in a situation where the device is controlled from a remote location. In such an instance, it is necessary to bring the hung software to a forced end. The electronic device cannot be used until the hung software is forcibly terminated.

Embodiments of the present invention seek to clear the above-mentioned trouble from a remote location and makes it possible to use the network function again.

Aspects of the present invention are set out in the claims.

According to an embodiment of the present invention, there is provided a restarter, which is to be connected to a base unit that transmits desired data to a terminal unit via a network. The restarter includes: a communication controller circuit, which is connected to the network to receive a control command that is transmitted from the terminal unit; a detection circuit for achieving control command detection when a first control command is received by the communication controller circuit; and a switch, which is subjected to on/off control that is exercised according to a detection output from the detection circuit.

In this restarter, the switch may be serially connected to a power supply line between a power input end of the base unit and a power supply end of the base unit, and when the first control command is transmitted from the terminal unit, the switch may be controlled during a predetermined period so that the status of the switch changes from ON to OFF and then back to ON in accordance with the detection output from the detection circuit.

Even when the base unit hangs up while the terminal unit is used at a remote location, embodiments of the present invention make it possible to restart the base unit from the currently used terminal unit and achieve recovery from the hangup.

Further, since the base unit is turned off, turned back on, and then restarted, all components are properly initialized as is the case where the power is turned off and then back on during normal use. Therefore, the restart and the operation performed after the restart are proper. Furthermore, since the restarter can be constructed as a stand-alone unit and works when it is connected to a power supply line for the base unit, it is effective for an existing base unit.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a schematic diagram illustrating an embodiment of the present invention;
FIG. 2 is a schematic diagram illustrating an AV device having a network function;
FIG. 3 is a schematic diagram illustrating an embodiment of the present invention; and
FIG. 4 is a schematic diagram illustrating another embodiment of the present invention.

### [1] Outline of an AV device having a network function

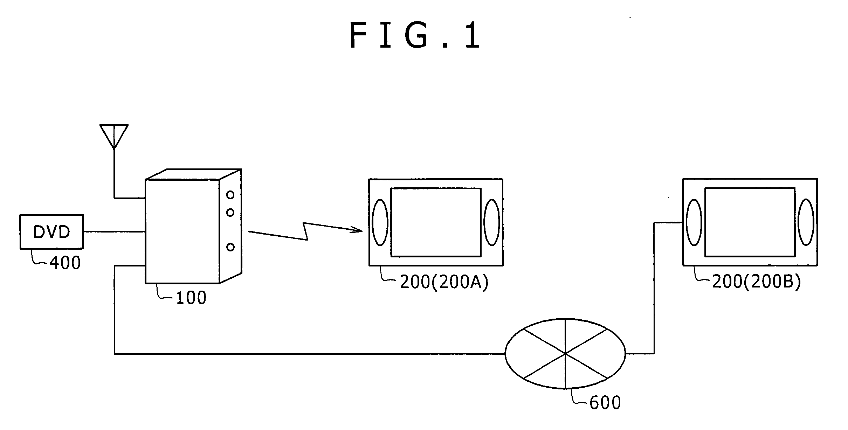

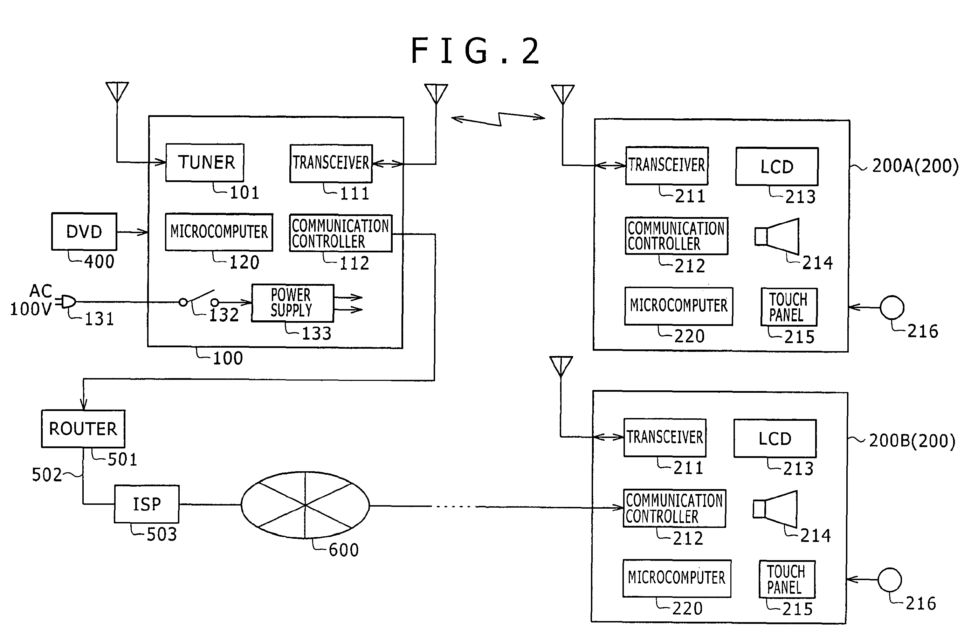

FIG. 1 shows a typical use of an AV device that permits the user to freely view or listen to content, which is prepared at home, no matter whether the user is at home or at a remote location away from home. FIG. 2 shows the outline of a typical configuration of the AV device. The AV device includes a base unit 100 and a portable monitor (portable display unit) 200.

The base unit 100 is installed, for instance, at home to supply various video signals and audio signals to the portable monitor 200. The portable monitor 200 is a terminal for receiving video and audio from the base unit 100 and viewing or listening to the received video and audio at home or at a remote location. The reference numeral 200A denotes a portable monitor for use at home. The reference numeral 200B denotes a portable monitor for use at a remote location such as a hotel.

As shown in FIG. 2, the base unit 100 incorporates a tuner circuit 101 for receiving a TV broadcast and is connected to an external AV device such as a DVD player 400. Further, the base unit 100 includes a transceiver circuit 111 and a communication controller circuit 112.

The transceiver circuit 111 wirelessly connects the base unit 100 to portable monitor 200A, and complies, for instance, with the IEEE (Institute of Electrical and Electronics Engineers) 802.11 standard. The communication controller circuit 112 establishes a connection to portable monitor 200B through the Internet 600. The communication controller circuit 112 is an LSI (Large Scale Integration) for connecting the base unit 100 to the Internet 600 for the purpose of establishing network communication. The communication controller circuit 112 analyzes packets that are transmitted/received in accordance with the TCP/IP (Transmission Control Protocol/Internet Protocol), and exercises control over data selection, transmission, and reception.

The base unit 100 includes a microcomputer 120. The microcomputer 120 controls the operations of various components of the base unit 100. It has a nonvolatile memory (not shown) for storing various data. A commercial AC voltage is supplied to a power supply circuit 133 via a power plug 131 and a main power switch 132. A predetermined DC voltage is then derived from the supplied commercial AC voltage and supplied to various circuits as their operating voltage.

The communication controller circuit 112 is connected to the Internet 600, for instance, via a broadband router 501, an ADSL (Asymmetric Digital Subscriber Line) 502, and an ISP (Internet Service Provider) 503.

The portable monitor 200 includes a transceiver circuit 211 and a communication controller circuit 212. The transceiver circuit 211 makes a pair with the transceiver circuit 111 of the base unit 100 to wirelessly connect the base unit 100 to the portable monitor 200. The communication controller circuit 212 of the portable monitor 200 is identical with the communication controller circuit 112 of the base unit 100.

The portable monitor 200 also includes an LCD (Liquid Crystal Display) 213 and a speaker 214, which are used for video/audio output, and a touch panel 215. The touch panel 215 is used to exercise remote control over the base unit 100 from the portable monitor 200. The touch panel 215 is transparent and laid over a display surface of the LCD 213. The reference numeral 216 denotes a hardware-based operating control section, which includes, for instance, a menu button and channel selector buttons.

Further, the portable monitor 200 includes a microcomputer 220 for controlling the operations of various components of the base unit 100 and portable monitor 200. The portable monitor 200 operates from a rechargeable battery (not shown).

### [2] Operations of the base unit 100 and portable monitor 200

When the status of the power switch 132 for the base unit 100 is changed from OFF to ON, A DC voltage is output from the power supply circuit 133 and supplied to various circuits as their operating voltage. This causes the microcomputer 120 to start up a predetermined program. When the program starts up, various sections are initialized in accordance with the data stored in the nonvolatile memory of the microcomputer 120. Therefore, the base unit 100 is subsequently in the steady state.

When the menu button, which is included in the operating control section 216 of the portable monitor 200, is pressed, the microcomputer 220 displays a menu on the LCD 213. When the touch panel 215 is operated while the menu is displayed, the LCD 213 switches from the menu screen to various setup screens.

If, for instance, the menu screen is manipulated to select a setup screen for specifying whether the connection between the base unit 100 and portable monitor 200 is to be established wirelessly or through the Internet, the setup screen opens. When a connection method is selected from the setup screen, the result of selection is stored in the nonvolatile memory (not shown) of the microcomputer 220.

The portable monitor 200 can access the base unit 100 as described below and use the content supplied from the base unit 100.

### [2-1] When the portable monitor 200 is used at home

This is a case where the base unit 100 is wirelessly connected to the portable monitor 200. In this case, when an operating control button or icon displayed on the LCD 213 of portable monitor 200A is operated, a control command (including data as needed) is formulated by portable monitor 200A in accordance with the operation performed and wirelessly transmitted to the base unit 100 via the transceiver circuit 211.

In the base unit 100, the control command transmitted from portable monitor 200A is received by the transceiver circuit 111 and supplied to the microcomputer 120. Consequently, the base unit 100 is controlled in accordance with the operation performed with portable monitor 200A. For example, the broadcast on a target TV channel is received or the base unit 100 remotely controls the DVD player 400 to perform a reproduction operation. The video and audio signals obtained in this manner are wirelessly transmitted to portable monitor 200A via the transceiver circuit 111.

In portable monitor 200A, the video and audio signals transmitted from the base unit 100 are received by the transceiver circuit 211 and supplied to the LCD 213 and speaker 214. The LCD 213 and speaker 214 then output target video and audio. Consequently, portable monitor 200A allows the user to view or listen to the content prepared in the base unit 100.

### [2-2] When the portable monitor 200 is used at a remote location

This is a case where the base unit 100 is connected to the portable monitor 200 through the Internet. In this case, portable monitor 200B must be connected to the Internet via the communication controller circuit 212. When an operating control button or icon displayed on the LCD 213 of portable monitor 200B is operated, a control command is formulated by the microcomputer 220 in accordance with the operation performed and transmitted to the Internet 600 via the communication controller circuit 212 together with an IP address for designating the base unit 100.

In the base unit 100, the control command transmitted from portable monitor 200B is supplied to the microcomputer 120 via the communication controller circuit 112. The base unit 100 is then controlled in accordance with the operation performed with portable monitor 200B. Further, the target video signal and audio signal are transmitted, in the form of stream data, to the Internet 600 via the communication controller circuit 112 together with an IP address for designating portable monitor 200B.

In portable monitor 200B, the video and audio signals transmitted from the base unit 100 are obtained from the communication controller circuit 212. The LCD 213 and speaker 214 then output target video and audio. As a result, the content prepared at home can be viewed or listened to at a remote location through the Internet.

### [3] Restarter

### [3-1] Restarter configuration

The microcomputer 120 in the base unit 100 may hang up for some reason or other. In such an instance, it is necessary to bring the hung microcomputer 120 to a forced end as described earlier.

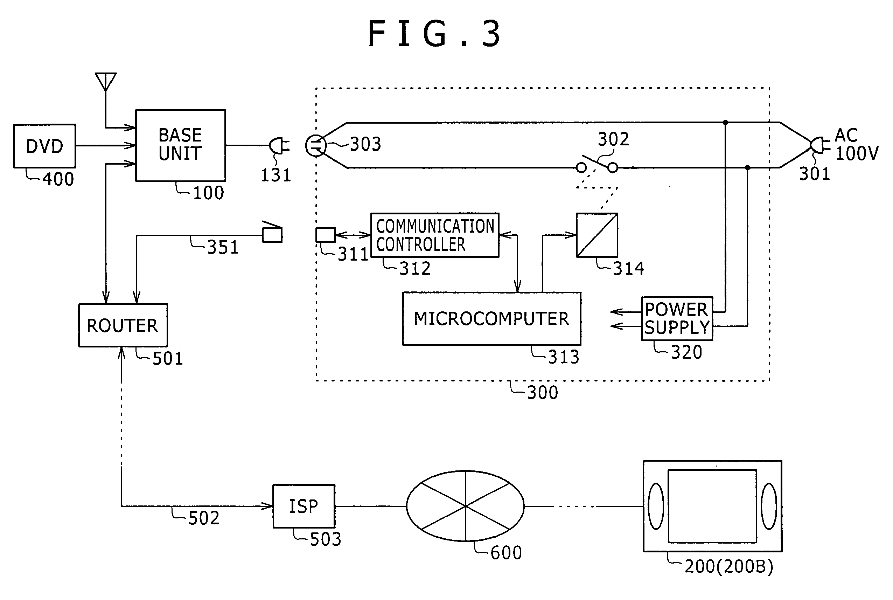

In FIG. 3, the reference numeral 300 denotes a restarter for brining the hung microcomputer 120 to a forced end and restarting it from the portable monitor 200.

The restarter 300 includes a power plug 301, a normally-open switch 302, and an outlet 303. The normally-open switch 302 is serially connected to a power supply line between the power plug 301 and outlet 303. The power plug 301 is connected, for instance, to a wall outlet (not shown) to receive a commercial AC voltage supply. The power plug 131 of the base unit 100 is connected to the outlet 303.

The restarter also includes a communication controller circuit 312, a microcomputer 313, and a relay 314. The communication controller circuit 312 is identical with communication controller circuits 112 and 212. It is connected to a modular jack 311 and to the microcomputer 313.

The microcomputer 313 is connected to the portable monitor 200 via the communication controller circuit 312 and the Internet 600. The microcomputer 313 exchanges various control commands with the portable monitor 200. Further, the microcomputer 313 detects and determines the control commands as described later.

The relay 314 is driven in accordance with an output from the microcomputer 313. For example, a normally-open contact of the relay 314 is used as the normally-open switch 302. The commercial AC voltage supplied to the power plug 301 is forwarded to a power supply circuit 320. A predetermined DC voltage is derived from the commercial AC voltage and supplied to various circuits as their operating voltage. The modular jack 311 is connected to the router 501 through a LAN (Local Area Network) cable 351.

A unique IP address is assigned to the restarter 300. This IP address is stored in the nonvolatile memory (not shown) of the microcomputer 313.

### [3-2] Operation of the restarter 300

In the steady state, the microcomputer 313 drives the relay 314 to turn ON its switch 302. Consequently, the commercial AC voltage supplied to the power plug 301 is supplied to the power plug 131 of the base unit 100 via the switch 302 and outlet 303.

Therefore, when the power switch 132 of the base unit 100 is ON, the process described under [2] is performed in the base unit 100 so that the base unit 100 and portable monitor 200 can be used.

### [3-2-1] Recovering from a hung base unit 100 from a remote location

If the base unit 100 hangs up for some reason while the portable monitor 200 is used at a remote location, the menu button 216 of the currently used portable monitor 200 should be operated to display a menu on the LCD 213. "Restart base unit" should then be chosen from the menu.

The microcomputer 220 then generates a control command that issues instructions for restarting the base unit 100. This control command is transmitted from the portable monitor 200 to the Internet 600 with the IP address of the restarter 300 specified. The control command is received by the restarter 300 and output from the communication controller circuit 312. Further, the microcomputer 313 detects or determines that the control command invokes a restart.

As a result, the microcomputer 313 does not drive the relay 314 for a predetermined period τ. The switch 302 is OFF during this period τ. Therefore, the base unit 100 is OFF during the period τ so that the software executed by the base unit 100 comes to a forced end.

When the period τ elapses, the microcomputer 313 drives the relay 314, thereby turning ON the switch 302. Therefore, the base unit 100 is turned back ON. Thus, preinstalled software starts up as is the case where the power switch 132 of the base unit 100 is turned ON.

When the software starts up, various components are initialized in accordance with the data stored in the nonvolatile memory of the microcomputer 120. Therefore, the base unit 100 is subsequently in the steady state so that the portable monitor 200 can access the base unit 100.

Even if the base unit 100 hangs up while the portable monitor 200 is used at a remote location, it is possible to restart the base unit 100 from the currently used portable monitor 200, which is at a remote location, and recover from the hung base unit 100.

### [3-2-2] Turning OFF the base unit 100 from a remote location

When the base unit 100 is not going to be used for a prolonged period of time although the portable monitor 200 is used at a remote location, the menu button 216 of the portable monitor 200 should be operated to display a menu on the LCD 213. "Turn OFF base unit" should then be chosen from the menu.

The portable monitor 200 then generates a control command that issues instructions for turning OFF the power. This control command is transmitted to the Internet 600 with the IP address of the restarter 300 specified. The control command is received by the restarter 300 and output from the communication controller circuit 312. Further, the microcomputer 313 detects or determines that the control command turns OFF the power. Consequently, the microcomputer 313 does not drive the relay 314. Thus, the switch 302 is subsequently OFF.

The commercial AC voltage supply to the base unit 100 is then shut off so that the base unit 100 is OFF. Since the base unit 100 can be turned OFF from a remote location, it is possible to minimize the power consumption.

### [3-2-3] Turning ON the base unit 100 from a remote location

When the base unit 100 is to be turned ON after it was turned OFF from a remote location as described under [3-2-2], the menu button 216 of the portable monitor 200 should be operated to display a menu on the LCD 213. "Turn ON base unit" should then be chosen from the menu.

The portable monitor 200 then generates a control command that issues instructions for turning ON the power. This control command is transmitted to the Internet 600 with the IP address of the restarter 300 specified. The control command is received by the restarter 300 and output from the communication controller circuit 312. Further, the microcomputer 313 detects or determines that the control command turns ON the power. Consequently, the microcomputer 313 drives the relay 314. Thus, the switch 302 is subsequently ON.

Then, the base unit 100 is energized again, and preinstalled software starts up as is the case where the power switch 132 is turned ON. As a result, the base unit 100 is in the steady state as is the case where the period τ is elapsed as described under [3-2-1], and the portable monitor 200 can access the base unit 100.

Even when the base unit 100 is turned OFF for the purpose of minimizing the power consumption, it can be turned back ON from a remote location and used as the base unit 100 as described above.

### [4] Conclusion

Even if the base unit 100 hangs up while the portable monitor 200 is used at a remote location, the restarter 300 described above enables the currently used portable monitor 200 to recover from the hung base unit 100 by restarting it.

Further, since the base unit 100 is turned off, turned back on, and then restarted, all components are properly initialized as is the case where the power is turned off and then back on during normal use. Therefore, the restart and the operation performed after the restart are proper. Furthermore, since the restarter 300 can be constructed as a stand-alone unit as shown in FIG. 3 and works when it is connected to the power supply line for the base unit 100, it is effective for an existing base unit 100.

### [5] Another embodiment of the restarter 300

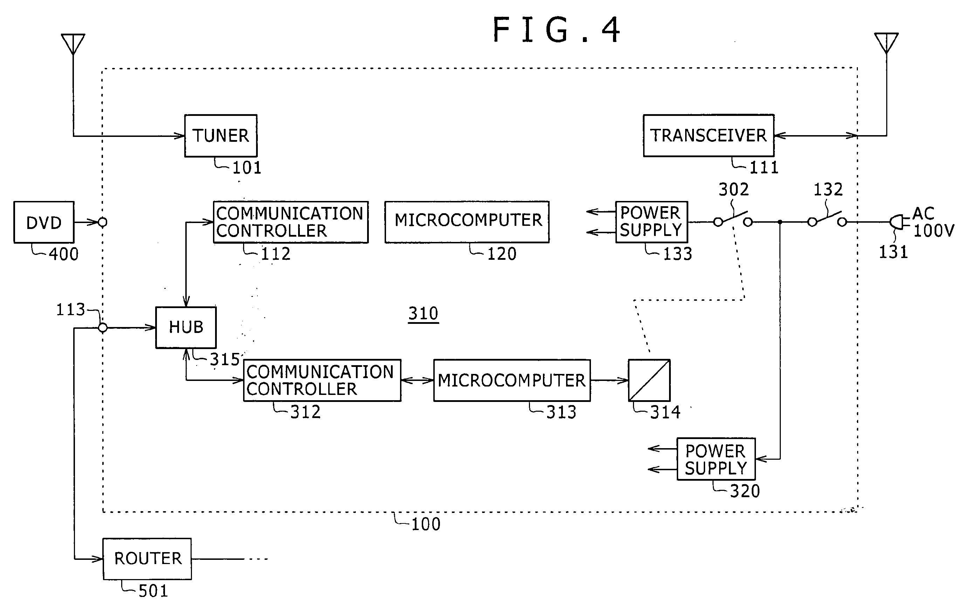

FIG. 4 illustrates a configuration in which the restarter 300 is constructed as a restarter circuit 310 and incorporated in the base unit 100. As is the case described under [3], this configuration also includes the communication controller circuit 312, microcomputer 313, relay 314, and power supply circuit 320. Communication controller circuits 122 and 312 are connected to a modular jack 113 via a hub circuit 315 and further connected to the router 501.

As is the case described under [3], the portable monitor 200 can therefore recover from a hung base unit 100 from a remote location, turn OFF the base unit 100 from a remote location, and turn ON the base unit 100 from a remote location.

### [6] Other

The base unit 100 and portable monitor 200, which have been described above, can be interconnected through a home LAN. Even if the base unit 100 hangs up in a situation where the above configuration is employed, the portable monitor 200 can restart the base unit 100.

Embodiments of the present invention provide a restarter that is capable of recovering from a hung base unit from a remote location. The restarter includes a communication controller circuit, which is connected to a network to receive a control command that is transmitted from a terminal unit; a detection circuit for achieving control command detection when a first control command is received by the communication controller circuit; and a switch, which is subjected to on/off control that is exercised according to a detection output from the detection circuit. The switch is serially connected to a power supply line between a power input end of the base unit and a power supply end of the base unit. When the first control command is transmitted from the terminal unit, the switch is controlled during a predetermined period so that the status of the switch changes from ON to OFF and then back to ON in accordance with the detection output from the detection circuit.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A restarter, which is to be connected to a base unit that transmits desired data to a terminal unit via a network, the restarter comprising:
a communication controller circuit, which is connected to the network to receive a control command that is transmitted from the terminal unit;
a detection circuit for achieving control command detection when a first control command is received by the communication controller circuit; and
a switch, which is subjected to on/off control that is exercised according to a detection output from the detection circuit,
wherein the switch is serially connected to a power supply line between a power input end of the base unit and a power supply end of the base unit; and
when the first control command is transmitted from the terminal unit, the switch is controlled during a predetermined period so that the status of the switch changes from ON to OFF and then back to ON in accordance with the detection output from the detection circuit.

2. The restarter according to claim 1,
wherein the detection circuit detects a second control command and a third control command in addition to the first control command;
when the second control command is transmitted from the terminal unit, the switch is controlled so that the status of the switch changes from ON to OFF in accordance with the detection output from the detection circuit; and
when the third control command is transmitted from the terminal unit, the switch is controlled so that the status of the switch changes from OFF to ON in accordance with the detection output from the detection circuit.

3. The restarter according to claim 1 or 2,
wherein the base unit includes a circuit for transmitting either a video signal and audio signal, which are obtained by demodulating a received TV broadcast wave signal, or an externally input video signal and audio signal in the form of stream data to the terminal unit via the network; and
the terminal unit includes a circuit for processing the stream data received via the network and generating video and audio as an output.

4. A video reception system comprising:
a base unit that includes a circuit for transmitting either a video signal and audio signal, which are obtained by demodulating a received TV broadcast wave signal, or an externally input video signal and audio signal in the form of stream data via a network;
a terminal unit that includes a circuit for processing the stream data received via the network and generating video and audio as an output and a circuit for transmitting a control command via the network; and
a restarter that includes a communication controller circuit, which is connected to the network to receive a control command that is transmitted from the terminal unit; a detection circuit for achieving control command detection when a first control command is received by the communication controller circuit; and a switch, which is subjected to on/off control that is exercised according to a detection output from the detection circuit, wherein
the switch is serially connected to a power supply line between a power input end of the base unit and a power supply end of the base unit; and
when the first control command is transmitted from the terminal unit, the switch is controlled during a predetermined period so that the status of the switch changes from ON to OFF and then back to ON in accordance with the detection output from the detection circuit.

5. The video reception system according to claim 4,
wherein the restarter permits the detection circuit to detect a second control command and a third control command in addition to the first control command;
when the second control command is transmitted from the terminal unit, the switch is controlled so that the status of the switch changes from ON to OFF in accordance with the detection output from the detection circuit; and
when the third control command is transmitted from the terminal unit, the switch is controlled so that the status of the switch changes from OFF to ON in accordance with the detection output from the detection circuit.
